Europäisches Patentamt

European Patent Office

Office européen des brevets

(11) Publication number: **0 048 459**
**B1**

(12) **EUROPEAN PATENT SPECIFICATION**

(45) Date of publication of patent specification: 24.07.85

(51) Int. Cl.⁴: **G 01 P 1/07,** G 01 P 3/489

(21) Application number: **81107380.8**

(22) Date of filing: **17.09.81**

(54) Electric type speed meter.

(30) Priority: **22.09.80 JP 130599/80**

(43) Date of publication of application:
**31.03.82 Bulletin 82/13**

(45) Publication of the grant of the patent:
**24.07.85 Bulletin 85/30**

(84) Designated Contracting States:
**DE FR GB**

(56) References cited:
**DE-A-1 523 210**
**DE-A-2 730 699**
**GB-A-1 317 260**
**US-A-3 943 345**

**ELECTRONICS, volume 51, September 14, 1978
NEW YORK (US) N. BHASKARA RAO "Digital
differentiator determines shaft acceleration",
pages 147, 148**

(73) Proprietor: **HONDA GIKEN KOGYO KABUSHIKI
KAISHA**
**27-8, Jingumae, 6-chome**
**Shibuya-ku, Tokyo 150 (JP)**

(72) Inventor: **Onitsuka, Nobuyuki c/o KK HONDA
ROKKU**
**3700, Aza Wadayama Oaza Shimonaka,
Sadowara-cho**
**Miyazaki-gun Miyazaki-ken (JP)**
Inventor: **Fukamachi, Masaaki c/o KK HONDA
ROKKU**
**3700, Aza Wadayama Oaza Shimonaka,
Sadowara-cho**
**Miyazaki-gun Miyazaki-ken (JP)**
Inventor: **Sueyoshi, Masahiko c/o KK HONDA
ROKKU**
**3700, Aza Wadayama Oaza Shimonaka,
Sadowara-cho**
**Miyazaki-gun Miyazaki-ken (JP)**

(74) Representative: **Körber, Wolfhart, Dr. et al
Patentanwälte Dipl.-Ing. H. Mitscherlich Dipl.-
Ing. K. Gunschmann Dr.rer.nat. W. Körber
Dipl.Ing. J. Schmidt-Evers Dipl.-Ing. W. Melzer
Steinsdorfstrasse 10
D-8000 München 22 (DE)**

## Description

This invention relates to an electric speed meter according to the preamble of claim 1.

Such a speed meter is known from DE—A—27 30 699 (Widl).

The DE—A—27 30 699 (Widl) is directed to a system for indicating the speed of movement of a motor vehicle utilizing a stepper or pulse motor. A pulse generator supplies pulses corresponding to a measured value to a control circuit which includes a pulse former or shaper. The shaped pulses from the pulse former are supplied to a counter circuit which receives a timing signal from timing signal generator. Pulses from the pulse generator are counted by the counter circuit during the time intervals. The counter circuit also receives a constant value from a function generator. The counter circuit produces a pulse count signal which is supplied to a counter circuit. The counter circuit also supplies a pulse to the comparator which has a second input for receiving a pulse from the counter circuit. The comparator supplies a positive or negative pulse difference to a memory which stores the pulse difference signal. The stored pulse difference signal is applied from the memory to a reversible stepper motor.

*Widl* does not disclose any structure for providing an output indicating whether the pulse difference signal is positive or negative. This reference merely mentions that the comparator supplies such a signal without the disclosure of any structure.

This invention has been made with a view to remove those defects and is to provide an electric speed meter in which a pulse motor is controlled to rotate either in a regular direction, or in the reverse direction or to stop by a difference between a number value of pulses of a pulse generator counted at a predetermined time interval and a number value thereof counted in a preceding time interval, so that a position detecting means can become unnecessary, and consequently an entire apparatus can be simplified in construction.

This problem is solved by the electric speed meter of the invention as set out in the characterising part of claim 1.

The indicator is coupled to the driving shaft of the pulse motor through a damper device.

One example of this invention will now be explained with reference to the accompanying drawings, in which

Fig. 1 is a systematic diagram view of a speed meter of this invention,

Fig. 2 is a block diagram of a control circuit,

Fig. 3 is a time chart showing operations of an important portion thereof and

Fig. 4 is a sectional view of an indicator portion.

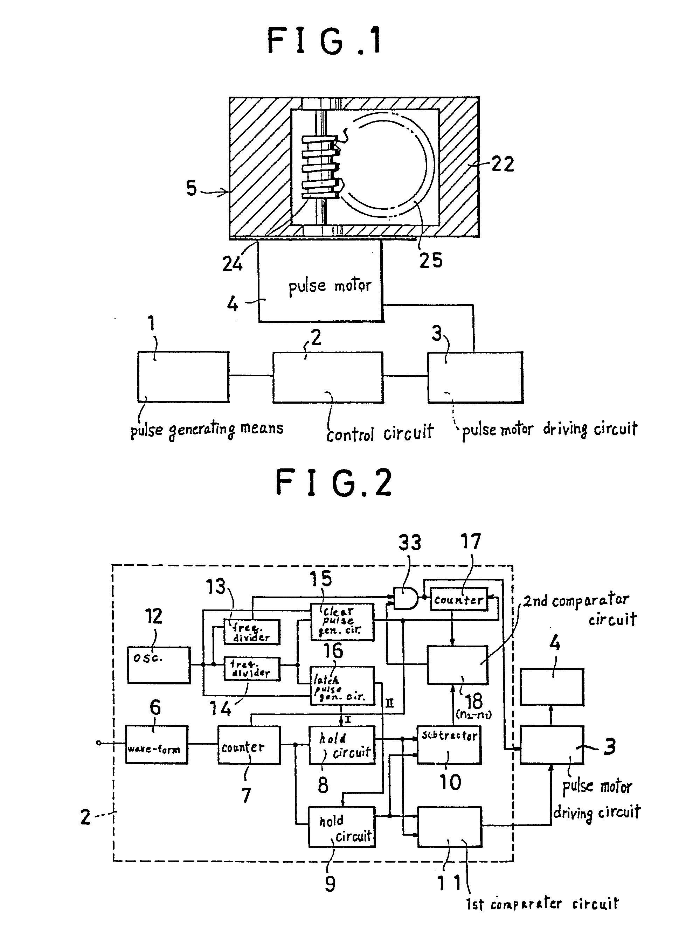

As shown in Fig. 1, this invention speed meter comprises a pulse generating means 1 arranged to generate a pulse signal corresponding to a vehicle speed, a control circuit 2 arranged to count the number of output pulses of the pulse generating means 1 at each time at regular time intervals and discriminate between positive and negative of a difference in pulse number between a number value counted during a predetermined time interval and a number value counted in a preceding time interval and generate pulse motor driving pulses of the number corresponding to the difference, and a pulse motor driving circuit 3 for distributing the output pulses of the control circuit 2 in sequence to coils of plural poles of a pulse motor 4. The pulse motor 4 is arranged to be rotated in a regular direction or in the reverse direction according to the output pulses of the pulse motor driving circuit 3, and the pulse motor 4 is connected to an indicator 5 as a driving source thereof.

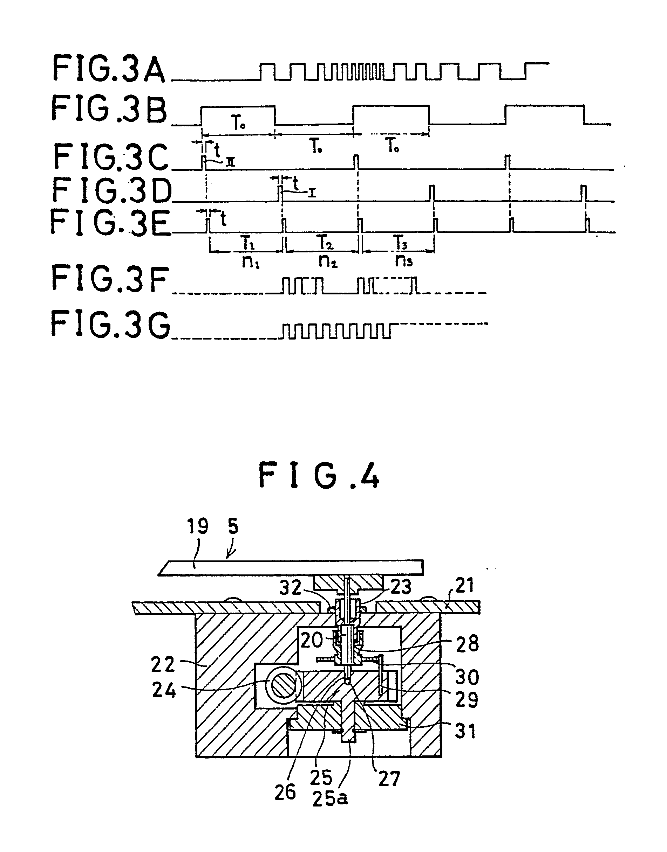

The foregoing pulse generating means 1 is so arranged that pulses which are in proportion to a rotation speed are generated, as an alternating current signal, through an electromagnetic pickup provided very near a gear attached to a wheel shaft of a vehicle. The alternating current signal is inputted to the control circuit 2 shown in Fig. 2, and in the first place the same is converted through a wave-form shaping circuit 6 into a series of square wave form pulses corresponding to a rotation speed of a vehicle wheel as shown in Fig. 3A, and is then counted by a counter 7 at each time $T_o$ set by a second frequency divider 14 explained thereafter, as shown in Fig. 3B. Namely, stable high frequency pulses are emitted from a standard oscillation circuit 12, and the pulses are so turned between "ON" and "OFF" at each set time $T_o$(0.1—0.2 second in this invention), by a second frequency divider 14 as shown in Fig. 3B, and at the rising time of the ON thereof, a latch pulse "II" is generated as shown in Fig. 3C and at the falling time of the OFF thereof a latch pulse "I" is generated as shown in Fig. 3D by a latch pulse generating circuit 16. A clear pulse generating circuit 15 generates each clear pulse rising when the latch pulses "I", "II" fall respectively as shown in Fig. 3E, and the time t of each of the latch pulses "I", "II" is so set as to be very short than the input frequency. The latch pulse "I" acts to operate a D type flip-flop 8, and the latch pulse "II" acts to operate a D type flip-flop 9.

Further, the clear pulse serves to so operate that immediately after the counted member value of the counter 7 is held by the latch pulses "I", "II" by the respective D type flip-flops 8, 9, the counted number value of the counter 7 and the counted number value of a counter 17 are cleared at the same time. Thus, the counted number values of the counter 7 are alternately inputted to and held by the D type flip-flop 8, 9. Namely, as shown in Fig. 3E, counted number value $n_1$ counted at an earlier time $T_1$ is inputted to and held by the D type flip-flop 8 and a counted number value $n_2$ counted at the subsequent time $T_2$ is inputted to and held by the D type flip-flop 9.

This pulse number values $n_1$, $n_2$ held respectively in the D type flip-flop 8, 9 are inputted to a first comparator circuit 11 and a subtractor circuit 10. At the just comparator circuit 11, a comparison between the two is carried out, and in the case of $n_2 > n_1$ a regular rotation signal, in the case of $n_2 = n_1$, a stop signal, and in the case of $n_2 < n_1$ a reverse rotation signal are delivered to the pulse motor driving circuit 3. At the same time, at the subtractor circuit 10, an absolute value $|n_2 - n_1|$ is obtained by calculation, and pulses of the number corresponding to that difference are conveyed to a second comparator circuit 18.

The second comparator circuit 18 is provided with an AND gate 33 and serves to compare between the difference pulse-number value and the counted number value of pulses inputted from a counter 17. An electric voltage level of an output thereof is so set that when the counted value of the counter 17 is smaller than the calculated value of the subtractor circuit 10 it may become a "H" level and when the two values are equal to each other it may become a "L" level. The counter 17 is connected to a standard oscillation circuit 12 through the AND gate 33 and a frequency divider 13, and serves to count the series of pulses of a proper frequency for driving the motor 4 (Fig. 3G) which is outputted through the AND gate 33 from the frequency divider 13, when the AND gate is opened, and is so arranged that the same begins its counting from the time of falling of the clear pulse (Fig. 3E).

Thus, when the counted number value of the counter 17 is smaller than that of the subtractor circuit 10, the AND gate 33 is opened by the "H" level voltage outputted from the second comparator circuit 18, and when the two counted values as above become equal each other the same is closed by the "L" level voltage. Thus, during the time that the counted value of the counter 17 is smaller than that of the subtractor circuit 10, the pulses for driving the pulse motor are inputted to the pulse motor driving circuit 3, and when the counter 17 counts the number corresponding to the foregoing difference number value, the AND gate 33 is closed by the output of the second compartor circuit 18. Consequently, among the output pulses of the foregoing frequency divider 13 shown in Fig. 3G, only the counted value of the subtracted circuit 10 shown in Fig. 3F, that is, only the pulse number which is equal to the pulse number difference $n_2 - n_1$ is inputted into the pulse motor driving circuit 3.

Thus, the control circuit of this invention fulfils such a function that a frequency corresponding to a vehicle speed is shaped into a square wave one and thereafter is counted in sequence at set time intervals and such pulses for driving the pulse motor that are equal in number to a pulse number difference between the value counted at the present time and the value counted just before the present time, and when that value of the difference is positive, a regular rotation signal is given to the pulse motor driving circuit and when the same is negative, the reverse rotation signal is given thereto.

Next, one example of the indicator 5 for indicating a speed by that a pointer thereof is rotated according to any of the regular rotation, the reverse rotation and the stop of the pulse motor 4 will be explained with reference to Fig. 4.

A pointer shaft 20 having at its forward end a pointer 19 is supported at its middle portion through a bearing 23 by a frame body 22 having an indication dial plate 21, and its lower portion is supported through a ball 27 by a bearing opening 26 made in the axial center of a worm wheel 25 meshed with a worm 24 mounted on a rotary shaft of the foregoing pulse motor 4. Between those shaft bearings 23, 26, an oil cup 28 filled with a brake oil for soaking therein a lower portion of the foregoing bearing 23 is provided, and the oil cup 28 and an eccentric pin 29 which is so provided on the foregoing worm wheel 25 as to be eccentrically in relation to the oil cup 28 are interconnected through a spiral spring 30.

Referring to the drawing, numeral 31 denotes a bearing plate provided on the frame body 22 for supporting through a rotary shaft 25a the foregoing worm wheel 25, and numeral 32 denotes a fastening nut for fixing the foregoing bearing 23 to the frame body 22.

With this invention constructed as above, the frequency pulses generated from the pulse generating means 1 and corresponding to a vehicle speed are shaped into square wave form ones and thereafter are counted in sequence at each time at regular time intervals, and pulse motor driving pulses which are equal to a difference between the present counted value and the preceding counted value, and a regular or reverse rotation signal of the pulse motor are generated, and those driving pulses and the regular or reverse rotation signal are distributed in sequence to coils of plural poles of the pulse motor 4 through the pulse motor driving circuit 3 to rotate the motor 4 in regular or reverse. Accordingly, when the vehicle speed is in the direction of acceleration, there are inputted from the control circuit 2 to the pulse motor driving circuit 3 the regular rotation signal for the pulse motor 4 and the pulse motor driving pulses which are equal to the difference between the number of pulses counted during a predetermined time interval and the number of pulses counted in a preceding time interval at each set time $T_0$ (0.1—0.2 second), and thereby the pulse motor 2 is rotated in the regular direction by a degree corresponding to that number of pulses, and thus the pointer 19 is turned through the spiral spring 30 as a result of rotation of the worm wheel 25 rotated in the clockwise direction through the worm 24 which is integral with the motor shaft, so as to point a certain graduation speed on the dial plate 21.

Thus, according to this invention, it is so arranged that a pulse motor is controlled in its regular or reverse rotation or stop by a difference in pulse, number between a value counted during a predetermined time interval and a value counted in a preceding time interval, and consequently providing of a position detecting means in a control circuit becomes unnecessary and an entire apparatus can be simplified.

In addition, since the control circuit can be wholly constructed by digital circuits, the same can be in a microcomputer of one chip and can be a compact and high precise circuit.

In addition, the indicator is so constructed that a worm wheel meshed with a pulse motor shaft and a pointer shaft are separated one other and arranged to be moved with each other through a spiral coil and be damped by a damper oil, so that in spite of a direct connection between the pulse motor and the driving worm, a smooth movement of the pointer can be obtained.

## Claims

1. An electric speed meter comprising a pulse generating means (1) for generating a pulse signal corresponding to a vehicle speed, a control circuit means (2) for counting the number of output pulses of the pulse generating means (1) during predetermined time intervals and for discriminating between a positive and negative difference between the number of pulses counted during a predetermined time interval and the number of pulses counted in a preceding time interval and for generating a pulse signal corresponding to the difference therebetween, a pulse motor driving circuit (3) for applying in sequence the output pulses of the control circuit means to a pulse motor (4) for controlling the pulse motor (4) in either a forward direction or a reverse direction and a indicator means (5) operable in response to the pulse motor for indicating a speed corresponding to the speed of the vehicle, the control circuit means (2) comprises a counter means (7) for counting the number of pulses generated by the pulse generating means (1), holding circuit means (8, 9) for counting and holding the number of pulses counted by the counter means (7) during the predetermined time interval and a preceding time interval, a first comparator means (11) coupled to the pulse motor (4) for discriminating between the positive and negative difference of the values of the holding circuit means (8, 9) and generating either a forward rotational signal or a reverse rotational signal for the pulse motor (4), subtractor circuit means (10) coupled to the holding circuit means (8, 9) for providing a difference between the number of pulses counted during each time interval and during the preceding time interval, oscillator means (12) for generating puless of frequency for driving the motor (4) characterised by further counter means (17) for counting the number of pulses applied to the pulse motor (4) by the oscillator means (12), second comparator means (18) for comparing the output of the subtractor means (10) and the further counter means (17) and an AND circuit (33) having one input coupled to the oscillator means (12) and the other input coupled to the second comparator means (18) and the output thereof coupled to the pulse motor (4) and the further counter means (17), wherein the number of pulses applied to the pulse motor (4) by the oscillator means (12) is controlled and the rotational speed of the pulse motor (4) is thereby controlled.

2. An electric type speed meter as claimed in Claim 1, characterised in that, the indicator means (5) is coupled to the driving shaft of the pulse motor (4) through a damper means (28).

## Revendications

1. Tachymètre électrique comprenant un moyen générateur d'impulsions (1) pour émettre un signal pulsé correspondant à la vitesse d'un véhicule, un circuit de contrôle (2) pour compter le nombre d'impulsions émises par le moyen générateur d'impulsions (1) pendant des intervalles de temps prédéterminés et pour discriminer entre une différence positive ou négative entre le nombre d'impulsions comptées pendant un intervalle de temps prédéterminé et le nombre d'impulsions comptées pendant un intervalle de temps précédent et pour produire un signal pulsé correspondant à cette différence, un circuit (3) de commande d'un moteur à impulsions pour appliquer séquentiellement les impulsions de sortie du circuit de contrôle (2) à un moteur à impulsions (4) pour commander ce moteur (4) soit dans le sens normal soit dans le sens inverse, et un moyen indicateur (5) pouvant être actionné par le moteur à impulsions pour indiquer une vitesse correspondant à la vitesse du véhicule, le circuit de contrôle (2) comportant un compteur (7) pour compter le nombre d'impulsions émises par le moyen générateur d'impulsions (1), des circuits de maintien (8, 9) pour compter et retenir le nombre d'impulsions comptées par le compteur (7) au cours de l'intervalle de temps prédéterminé et au cours de l'intervalle de temps précédent, un premier moyen comparateur (11) couplé au moteur à impulsions (4) pour discriminer entre la différence positive ou négative des valeurs des circuits de maintien (8, 9) et émettre soit un signal de rotation en sens normal, soit un signal de rotation en sens inverse pour le moteur à impulsions (4), un circuit soustracteur (10) couplé aux circuits de maintien (8, 9) pour fournir une différence entre le nombre d'impulsions comptées pendant chaque intervalle de temps et pendant l'intervalle de temps précédent, et un oscillateur (12) pour émettre des impulsions de fréquence pour entraîner le moteur (4), caractérisé par un moyen de comptage supplémentaire (17) pour compter le nombre d'impulsions appliquées au moteur à impulsions (4) par l'oscillateur (12), un deuxième moyen comparateur (18) pour comparer le résultat du moyen soustracteur (10) et du moyen supplémentaire de compatage (17), et un circuit "ET" (33) ayant une entrée couplée à l'oscillateur (12) et l'autre entrée couplée au deuxième moyen comparateur (18) et sa sortie couplée au moteur à impulsions (4) et au moyen supplémentaire de comptage (17) dans lequel le nombre d'impulsions appliquées au moteur à impulsions (4) par l'oscillateur (12) est contrôlé de manière à commander la vitesse de rotation du moteur à impulsions (4).

2. Tachymètre électrique selon la revendication 1, caractérisé en ce que le moyen indicateur (5) est relié à l'arbre moteur du moteur à impulsions (4) par l'intermédiaire d'un moyen amortisseur (28).

**Patentansprüche**

1. Elektrischer Geschwindigkeitsmesser, der ein Impulse erzeugendes Mittel (1), das ein der Fahrzeuggeschwindigkeit entsprechendes Impulssignal erzeugt, ein Kontrollkreismittel (2), zur Zählung der Anzahl der vom Impulse erzeugenden Mittel (1) während eines vorgegebenen Zeitraumes abgegebenen Impulse und zur Unterscheidung zwischen einer positiven und einer negativen Differenz zwischen der Anzahl der Impulse, die Während eines vorbestimmten Zeitintervalls und der Impulsanzahl, die während eines vorhergehenden Zeitintervalls gezählt wurden und zur Erzeugung eines der festgestellten Differenz entsprechenden Impulssignals, ein einen Schrittschaltmotor (4) antreibender Stromkreis (3), um nach einander die Ausgangsimpulse des Kontrollkreismittels (2) dem Schrittschaltmotor (4) zuzuleiten, um diesen Motor (4) für eine Vorwärts- oder eine Rückwärtsdrehung zu schalten, und ein Anzeigemittel (5) aufweist, das auf den Schrittschaltmotor (4) reagiert und eine Geschwindigkeit anzeigt, die der Fahrzeuggeschwindigkeit entspricht, wobei das Kontrollkreismittel (2) eine Zähleinrichtung (7) zur Zählung der Anzahl der vom Impulsgenerator (1) erzeugten Impulse, Speicherstromkreismittel (8, 9), um die Anzahl der Impulse, die vom Zählmittel (7) während eines vorbestimmten sowie eines vorhergehenden Zeitintervalls gezählt wurden, festzustellen und zu speichern, eine erste Vergleichseinrichtung (11), die mit dem Schrittschaltmotor (4) gekoppelt ist, um zwischen der positiven und der negativen Differenz der im Haltekreis (8, 9) gespeicherten Werte zu unterscheiden und um entweder ein Vorwärts- oder Rückwärtsdrehsignal für den Schrittschaltmotor zu erzeugen, Subtraktionskreismittel (10), das mit dem Speicherkreismittel (8, 9) gekoppelt ist, um eine Differenz zwischen der Anzahl der während jedes Zeitintervalls und der während des vorhergehenden Intervalls gezählten Impulse zu ermitteln, und Oscillatormittel (12) umfaßt, die Frequenzimpulse erzeugen, um den Motor (4) anzutreiben dadurch gekennzeichnet, daß Zählmittel (17) zur Zählung der Impulszahlen, die dem Schrittschaltmotor (4) vom Oscillator (12) zugeleitet werden, sowie zweite Vergleichsmittel (18), um das Ergebnis des Abzugskreismittels (10) und weitere Zählmittel (17) und ein UND Stromkreis (33) vorgesehen sind, der einen mit dem Oscillatormittel (12) gekoppelten Eingang aufweist, dessen anderer Eingang mit dem zweiten Vergleichsmittel (18) und dessen Ausgang mit dem Schrittschaltmotor (4) und dem weiteren Zählmittel (17) gekoppelt ist, in dem die Anzahl der Impulse, die dem Schrittschaltmotor (4) vom Oscillatormittel (17) zugeleitet werden, kontrolliert wird und dadurch die Drehzahl des Schrittschaltmotors (4) gesteuert wird.

2. Geschwindigkeitsmesser nach Anspruch 1 dadurch gekennzeichnet, daß das Anzeigemittel (5) mit der Antriebswelle des Schrittschaltmotors (4) über ein Dämpfungsmittel (78) gekuppelt ist.

**0 048 459**

# F I G .1

5

22

24     25

pulse motor

4

1     2     3

pulse generating means     control circuit     pulse motor driving circuit

# F I G.2

33   17

13   15

counter

2nd comparator circuit

12

freq. divider

clear pulse gen. cir.

osc.

freq. divider

16

latch pulse gen. cir.

4

6

14

18 $(n_2 - n_1)$

wave-form

counter

hold circuit

subtractor

3

7

8

10

pulse motor driving circuit

hold circuit

2

9   1 1

1st comparator circuit

1

FIG.3A

FIG.3B

FIG.3C

FIG.3D

FIG.3E

FIG.3F

FIG.3G

F I G . 4